# EUROPEAN PATENT APPLICATION

(11) **EP 2 128 106 A1**
(43) Date of publication of application: **02.12.2009**
(21) Application number: 08711955.8
(22) Date of filing: 26.02.2008
(51) Int. Cl.: C03C 27/12, B32B 17/10, B60J 1/00, C08J 5/18, C08K 3/10

(54) **FILM AND INTERMEDIATE FILM FOR LAMINATED GLASS COMPOSED OF THE SAME**

(30) Priority: 28.02.2007 JP 2007048611; 28.02.2007 JP 2007048612
(71) Applicant: Kuraray Co., Ltd., Kurashiki-shi Okayama 710-0801 (JP)
(72) Inventor: MORIKAWA, Keisuke, Ibaraki 3140197 (JP); ENDO, Ryokei, Tokyo 100-8115 (JP); MORIGUCHI, Nobuhiro, Kurashiki-shi Okayama 710-0801 (JP)
(74) Representative: Müller-Boré & Partner Patentanwälte
(86) International application number: PCT/JP2008/053226
(87) International publication number: WO 2008/105380

(57) **Abstract**

A film is provided that is formed of at least one kind of a thermoplastic resin (A), selected from the group consisting of a polyvinyl acetal resin, a polyethylene vinyl acetate copolymer resin, a polyurethane resin, a polyester resin, and a polyacrylic resin, and contains microparticles of a copper compound (B) having an average particle diameter of 200 nm or less. The film is excellent in transparency, a heat-shielding property, electromagnetic wave permeability, and durability, so that it is suitable to be an interlayer film for laminated glass.

## Description

### TECHNICAL FIELD

The present invention relates to a film that is excellent in transparency, a heat-shielding property, durability, and electromagnetic wave permeability, and to a method of producing the same. The invention also relates to an interlayer film for laminated glass that is formed of such a film and has good adhesion to glass. The invention further relates to a laminated glass using such an interlayer film for laminated glass.

### BACKGROUND ART

In recent years, as part of an attempt to energy conservation, there are increasing demands for so-called heat ray-shielding materials, which reflect or absorb near infrared rays, in windowpanes and the like of buildings and vehicles. Conventionally, laminated glasses are widely used for, for example, windowpanes of vehicles, such as automobiles, aircrafts, buildings, and the like in order to improve safety, for example, to prevent glass from being shattered. An example of such a laminated glass may be, for example, produced by interposing an interlayer film for laminated glass of, for example, a plasticized polyvinyl butyral resin between at least a pair of glass sheets to laminate them. However, when using such an interlayer film for laminated glass, there is a problem of not being able to shield near infrared rays (heat rays), which has a great thermal action, so that it has been required to impart a heat-shielding property. In particular, it is desired to efficiently shield heat rays of from 780 nm to 1200 nm, which is considered to relate to feelings of burning and sensation of heat to body.

To such demands, films are proposed to which a heat-shielding function is imparted by combining tin-doped indium oxide (ITO) microparticles or antimony-doped tin oxide (ATO) microparticles in a polymer (refer to Patent Documents 1 to 4). In addition, interlayer films for laminated glass are also proposed to which a heat-shielding function is imparted similarly (refer to Patent Documents 5 to 8). However, since the ITO or ATO microparticles may aggregate with each other while kneading the microparticles, these interlayer films have a problem that the haze becomes worse even though a near infrared ray-shielding property can be imparted. Consequently, actual use is subjected to some limitations, and it has also been necessary to add a dispersing agent or the like. Moreover, ITO has problems, such as depletion of resources and a rise in price, and ATO has problems, such as unsatisfactory performance, so that alternative materials for them are desired.

In addition, a film is proposed that is produced by melt-kneading copper sulfide having a heat ray-shielding property in a transparent polymer to be combined (refer to Patent Document 9). In this film, a powder of copper sulfide particles with a size of 10 µm or less (8 µm in Example) is blended into a resin. Due to the large particle diameter, light scatters in visible light to result in deterioration of haze, and thus the film has a problem of impaired transparency. In particular, it has been difficult to use as an interlayer film for laminated glass.

In order to impart a heat ray-shielding property while inhibiting the deterioration in haze, materials are also proposed that use an organic substance combined in a polymer relatively easily. Although a method is proposed, for example, in which a phthalocyanine compound is used as a near infrared ray absorber (refer to Patent Documents 10 to 12), there has been a basic problem of durability with organic substances, such as poor weather resistance and thus impaired effects in long-term use.

On the other hand, for the purpose of cutting off heat rays, there are films having a surface that is coated with a metal or a metal oxide by metal deposition, sputtering, or the like. In addition, as a glass to which a heat-shielding property is imparted, heat ray-cutting glasses, for example, are commercially available. Heat ray-cutting glasses are produced by coating the surfaces of glass sheets with a metal or a metal oxide by metal deposition, sputtering, or the like. However, the transparency (visible light transmittance) is decreased when thickening the layer to enhance the property of shielding near infrared rays, so that actual use has been subjected to some limitations. In addition, such coated films have problems of inhibiting transmission of electromagnetic waves used for various communication facilities, such as ham radios, emergency communication devices, communication systems, and satellite broadcasting systems, and affecting cellular phones and various communication systems. In particular, while various communication facilities, for example, ham radios, emergency communication devices, VICS (Vehicle Information and Communications System), ETC (Electronic Toll Collection system), and satellite broadcasting systems have been mounted in automobiles increasingly in recent years, such a coated glass has problems of inhibiting transmission of electromagnetic waves and affecting communication systems, such as cellular phones, car navigation systems, garage openers, and electronic toll collection systems. Furthermore, actual use has been subjected to some limitations due to the problems, such as poor processability of the coating method.

[Patent Document 1] JP 8-281860A
[Patent Document 2] JP 10-250001A
[Patent Document 3] JP 10-250002A
[Patent Document 4] JP 9-140275A
[Patent Document 5] JP 8-217500A
[Patent Document 6] JP 8-259279A
[Patent Document 7] JP 2001-302289A
[Patent Document 8] JP 2005-343723A
[Patent Document 9] JP 6-73197A
[Patent Document 10] JP 2003-265033A
[Patent Document 11] JP 2003-265034A
[Patent Document 12] JP 2005-157011A

### DISCLOSURE OF THE INVENTION

### PROBLEM TO BE SOLVED BY THE INVENTION

An object of the present invention is to provide a film that is excellent in transparency, a heat-shielding property, electromagnetic wave permeability, and durability, and a method of producing the same. In addition, it is to provide an interlayer film for laminated glass that is formed of such a film and has good adhesion to glass, and a laminated glass using the same.

### MEANS FOR SOLVING THE PROBLEM

As a result of keen examination to solve the aforementioned problems, the present inventors found that a film comprising at least one kind of a thermoplastic resin (A) selected from the group consisting of a polyvinyl acetal resin, a polyethylene vinyl acetate copolymer resin, a polyurethane resin, a polyester resin, and a polyacrylic resin, wherein the film contains microparticles of a copper compound (B) having an average particle diameter of 200 nm or less, is excellent in transparency, electromagnetic wave permeability, and durability and also has a heat-shielding property that efficiently shields wavelengths within a range of from 780 nm to 1200 nm, which causes a strong sensation of heat to the skin, and thus have come to complete the present invention.

Further, the film of the present invention is preferably a film that exhibits a visible light transmittance of 70% or more, which is determined in accordance with JIS R 3106, at a wavelength within a range of from 380 to 780 nm and a solar transmittance of 70% or less, which is determined using a weighting factor provided in JIS R 3106, at a wavelength within a range of from 780 to 1200 nm, which causes a strong sensation of heat to the skin, and has a haze of 5.0% or less. It is also preferred that, in the film of the present invention, the copper compound (B) is contained in a range of greater than 0 part by weight and not more than 3.0 parts by weight in terms of 100 parts by weight of the thermoplastic resin (A).

Here, it is preferred that the thermoplastic resin (A) is a polyvinyl acetal resin or a polyethylene vinyl acetate copolymer resin, and more preferred that the thermoplastic resin (A) is a polyvinyl acetal resin, and particularly preferred that it is a polyvinyl butyral resin. It is also preferred that the copper compound (B) is copper sulfide. In addition, it is also preferred that the microparticles of the copper compound (B) are formed by carrying out a chemical reaction of copper ions in the presence of the thermoplastic resin (A).

A preferred embodiment of the present invention is an interlayer film for laminated glass comprising the film. In this embodiment, it is preferred that the interlayer film contains 20 to 100 parts by weight of a plasticizer (C) in terms of 100 parts by weight of the thermoplastic resin (A). A laminated glass comprising the interlayer film for laminated glass is another preferred embodiment. In this embodiment, it is preferred that the laminated glass exhibits a visible light transmittance of 70% or more at a wavelength within a range of from 380 to 780 nm and a solar transmittance of 70% or less at a wavelength within a range of from 780 to 1200 nm and has a haze of 5.0% or less.

A preferred method of producing the film mentioned above is a method comprising: forming the microparticles of the copper compound (B) by carrying out a chemical reaction of the copper ions in the presence of the thermoplastic resin (A). In this embodiment, it is preferred that the thermoplastic resin (A) is impregnated with a compound containing copper ions, and then the compound containing copper ions is reacted with a compound containing ions that can react with the copper ions to form the microparticles of the copper compound (B) in the thermoplastic resin (A) .

### EFFECT OF THE INVENTION

Films of the present invention are excellent in transparency, a heat-shielding property, electromagnetic wave permeability, and durability. Moreover, interlayer films for laminated glass formed of such a film have good adhesion to glass in addition to these performances, and it is possible to obtain a high-performance laminated glass.

### BRIEF DESCRIPTION OF THE DRAWINGS

Fig. 1 is a chart showing a light transmittance at a wavelength within a range of from 200 to 2500 nm of a film of Example 1.
Fig. 2 is a chart showing a light transmittance at a wavelength within a range of from 200 to 2500 nm of a film of Example 2.
Fig. 3 is a chart showing a light transmittance at a wavelength within a range of from 200 to 2500 nm of a film of Example 3.
Fig. 4 is a chart showing a light transmittance at a wavelength within a range of from 200 to 2500 nm of a film of Comparative Example 1.
Fig. 5 is a chart showing a light transmittance at a wavelength within a range of from 200 to 2500 nm of a film of Comparative Example 2.
Fig. 6 is a chart showing a light transmittance at a wavelength within a range of from 200 to 2500 nm of a film of Comparative Example 3.
Fig. 7 is a chart showing a light transmittance at a wavelength within a range of from 200 to 2500 nm of a laminated glass of Example 4.
Fig. 8 is a chart showing a light transmittance at a wavelength within a range of from 200 to 2500 nm of a laminated glass of Example 5.
Fig. 9 is a chart showing a light transmittance at a wavelength within a range of from 200 to 2500 nm of a laminated glass of Example 6.
Fig. 10 is a chart showing a light transmittance at a wavelength within a range of from 200 to 2500 nm of a laminated glass of Example 7.
Fig. 11 is a chart showing a light transmittance at a wavelength within a range of from 200 to 2500 nm of a laminated glass of Comparative Example 4.
Fig. 12 is a chart showing a light transmittance at a wavelength within a range of from 200 to 2500 nm of a laminated glass of Comparative Example 5.
Fig. 13 is a chart showing a light transmittance at a wavelength within a range of from 200 to 2500 nm of a laminated glass of Comparative Example 6.

### BEST MODE FOR CARRYING OUT THE INVENTION

The present invention is specifically described below. Examples of the thermoplastic resin (A) that can be used in the present invention include polyvinyl acetal resins, polyethylene vinyl acetate copolymer resins, polyurethane resins, polyester resins, and polyacrylic resins, and it is possible to use commercially available products. Among all, it is preferred to use polyvinyl acetal resins for the balance of ease of combination with the copper compound (B), mechanical properties and transparency of the resulting film, and the like. In a case of using as an interlayer film for laminated glass, it is particularly preferred to use polyvinyl acetal resins for reasons of adhesion to glass and mechanical properties.

Such a polyvinyl acetal resin can be obtained by carrying out reaction of a polyvinyl alcohol and an aldehyde in water and/or an organic solvent in the presence of an acid catalyst, optionally neutralizing the resulting polyvinyl acetal resin, washing it, and then drying it until the volatile content becomes a specific amount or less. The structure of the polyvinyl acetal resin thus obtained is shown in the following formula.

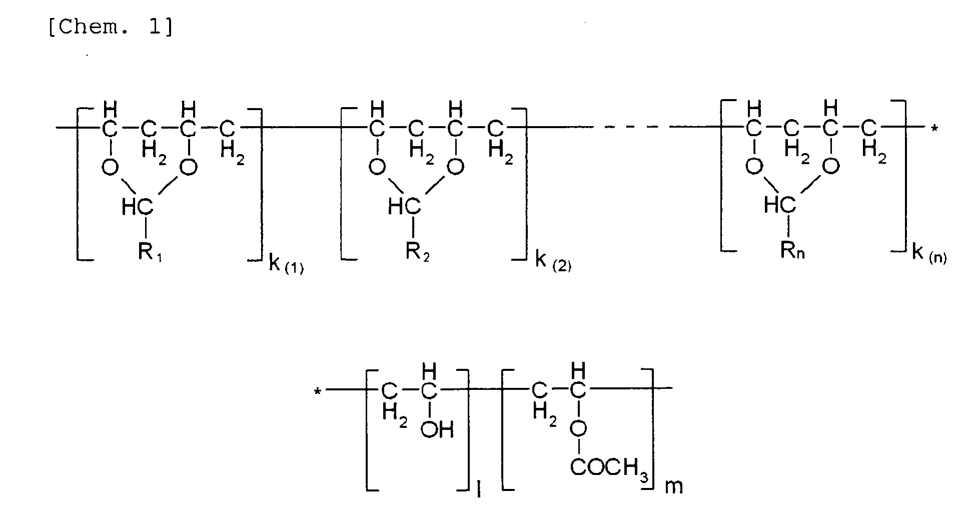

(In the formula, the meanings of n, k(n), 1, m, and Rₙ are shown as follows:
n: kind(s) of aldehyde used for acetalization (integer);
k(n): ratio (molar ratio) of acetal bonds containing aldehyde residue(s) Rₙ;
1: ratio (molar ratio) of polyvinyl alcohol bonds; and
m: ratio (molar ratio) of polyvinyl acetate bonds,
wherein k(1) + k(2) + ... + k(n) + 1 + m = 1 and R₁, R₂, ... Rₙ indicate residues of aldehydes used for the acetalization reaction.)
In the above formula, the mode of arrangement of each bond is not particularly limited and it may be in block or random form.

Methods of the reaction, neutralization, washing, and dewatering for such a polyvinyl acetal resin are not particularly limited and may be carried out by known methods. For example, the following methods may be applied: an aqueous solvent method in which an aqueous solution of a polyvinyl alcohol and an aldehyde are subjected to an acetalization reaction in the presence of an acid catalyst to precipitate resin particles; and a solvent method in which a polyvinyl alcohol is dispersed in an organic solvent, followed by an acetalization reaction with an aldehyde in the presence of an acid catalyst, and then the reaction solution is subjected to precipitation with a poor solvent for the polyvinyl acetal resin, such as water. By any method, a slurry in which a polyvinyl acetal resin is dispersed in a medium is obtained.

As the polyvinyl alcohol used for producing such a polyvinyl acetal resin, polyvinyl alcohols are used that have a number average degree of polymerization of generally from 200 to 5000, preferably from 300 to 3000, more preferably from 500 to 2500. When the polyvinyl alcohol has a number average degree of polymerization of less than 200, the mechanical properties of the resulting polyvinyl acetal are deficient and the mechanical properties, particularly toughness, of the film of the present invention are deficient. On the other hand, when the polyvinyl alcohol has a number average degree of polymerization of greater than 5000, the melt viscosity while melt-molding becomes too high and problems arise for production.

Such a polyvinyl alcohol is not particularly limited, and conventionally known polyvinyl alcohols may be used, such as polyvinyl alcohols produced by saponifying polyvinyl acetate with alkali, acid, ammonia water, or the like. While the degree of saponification of the polyvinyl alcohol may be completely saponified, a partially saponified polyvinyl alcohol may also be used, and it is preferred to use polyvinyl alcohols having a degree of saponification of 80 mol% or more in this case. Such a polyvinyl alcohol may be composed of a single kind or may also be a mixture of two or more kinds.

In addition, as such a polyvinyl alcohol, it is also possible to use copolymers of a vinyl alcohol and a monomer copolymerizable therewith, which include ethylene-vinyl alcohol copolymers, for example. Further, it is also possible to use modified polyvinyl alcohols with carboxylic acid or the like partially introduced therein.

The aldehyde used for producing such a polyvinyl acetal resin is not particularly limited and examples of such an aldehyde include formaldehyde (including paraformaldehyde), acetaldehyde (including paracetaldehyde), propionaldehyde, butyl aldehyde, amyl aldehyde, hexyl aldehyde, heptyl aldehyde, 2-ethylhexyl aldehyde, cyclohexyl aldehyde, furfural, glyoxal, glutaraldehyde, benzaldehyde, 2-methylbenzaldehyde, 3-methylbenzaldehyde, 4-methylbenzaldehyde, p-hydroxybenzaldehyde, m-hydroxybenzaldehyde, phenylacetaldehyde, and β-phenylpropionaldehyde. These aldehydes may be used singly, or two or more kinds in combination. Such an aldehyde preferably includes butyl aldehyde as a main constituent.

The acid catalyst for the acetalization reaction is not particularly limited and examples of such a catalyst include organic acids, such as acetic acid and p-toluenesulfonic acid, and inorganic acids, such as nitric acid, sulfuric acid, and hydrochloric acid.

Since the slurry after the acetalization reaction is usually acidic due to the acid catalyst, the pH is adjusted, as needed, to be from 5 to 9, preferably from 6 to 9, and more preferably from 6 to 8 by adding a neutralizer or the like. The neutralizer is not particularly limited and examples of such a neutralizer include: alkalis, such as sodium hydroxide, potassium hydroxide, ammonia, sodium acetate, sodium carbonate, sodium hydrogencarbonate, and potassium carbonate; alkylene oxides, such as ethyleneoxide; and glycidyl ethers, such as ethylene glycol diglycidyl ether.

The degree of acetalization of the polyvinyl acetal resin is preferably from 55 to 83 mol%. Polyvinyl acetal resins having a degree of acetalization of less than 55 mol% are not preferable because of the high production cost, the poor availability, and the poor melt-processability. Acetalization of a polyvinyl alcohol exceeding 83 mol% requires longer time for the acetalization reaction, so that it is not economical. Such a polyvinyl acetal resin may be composed of a single kind or may also be a mixture of two or more kinds.

When using the films of the present invention as an interlayer film for laminated glass, it is preferred to plasticize using a plasticizer (C). The plasticizer (C) is not particularly limited as long as it is conventionally used for interlayer films and polyvinyl acetal resins, and for example, organic acid ester-based plasticizers, such as monobasic and polybasic organic acid esters, and phosphoric acid-based plasticizers, such as organic phosphoric acid-based and organic phosphorous acid-based plasticizers, are used.

Examples of such a monobasic organic acid ester-based plasticizer include glycol-based esters obtained by reaction of a glycol, such as triethylene glycol, tetraethylene glycol, and tripropylene glycol, and a monobasic organic acid, such as butyric acid, isobutyric acid, caproic acid, 2-ethyl butyric acid, heptylic acid, n-octylic acid, 2-ethylhexyl acid, pelargonic acid (n-nonylic acid), and decylic acid. Among all, monobasic organic acid esters, such as triethylene glycol-dicaproic acid ester, triethylene glycol-di-2-ethyl butyric acid ester, triethylene glycol-di-n-octylic acid ester, and triethylene glycol-di-2-ethylhexyl acid ester, are preferred.

The polybasic organic acid ester-based plasticizer is not particularly limited, and examples of this plasticizer include esters of a linear or branched alcohol and a polybasic organic acid, such as adipic acid, sebacic acid, and azelaic acid. Among all, dibutyl sebacate, dioctyl azelate, dibutylcarbitol adipate, and the like are preferred. The organic phosphoric acid-based plasticizer is not particularly limited, and examples of this plasticizer include tributoxyethyl phosphate, isodecyl phenyl phosphate, triisopropyl phosphate, and the like. A single kind of such a plasticizer (C) may be used, and two or more kinds of such a plasticizer (C) may also be used in combination.

The plasticizer (C) is preferably added in an amount of from 20 to 100 parts by weight in terms of 100 parts by weight of the thermoplastic resin (A), such as a polyvinyl acetal resin. In a case of less than 20 parts by weight, the resulting interlayer film or laminated glass may have insufficient impact resistance, and in contrast, in a case of exceeding 100 parts by weight, the plasticizer (C) may bleed out, and thus may impair the transparency of the resulting interlayer film or laminated glass and the adhesion between the glass sheets and the interlayer film.

The copper compound (B) used for the purpose of imparting a heat-shielding property is required to be finely dispersed in the film, and in a case of not finely dispersed, visible light is scattered to increase the haze. It is also generally known that, in a case that the content of the copper compound (B) remains the same, the interparticle distance becomes one hundredth as the particle diameter becomes one hundredth. Since it is considered that heat rays can be efficiently shielded when the interparticle distance is the level of the wavelength of the heat rays, the particle diameter of the copper compound (B) is an important factor. In the present invention, the copper compound (B) is required to be dispersed in a film in the form of microparticles having an average particle diameter of 200 nm or less, and the average particle diameter is more preferably 50 nm or less, and particularly preferably 20 nm or less. Due to such nanosize effect, a heat-shielding property can be imparted with a small amount of the copper compound (B).

The copper compound (B) is preferably contained greater than 0 part by weight and not more than 3.0 parts by weight in terms of 100 parts by weight of the thermoplastic resin (A). In a case of greater than 3.0 parts by weight, the visible light transmittance may be decreased. An optimum content of the copper compound (B) varies depending on the thickness of the film, and when the film thickness is 1 mm for example, the copper compound (B) is more preferably contained 1.0 part by weight or less, even more preferably 0.5 parts by weight or less, particularly preferably 0.1 part by weight or less, and most preferably 0.05 parts by weight or less. Although the lower limit of the content of the copper compound (B) varies depending on the thickness of the film, the copper compound (B) is preferably contained in an amount such that the solar transmittance in the film at a wavelength within a range of from 780 nm to 1200 nm becomes 70% or less. In addition, when used for a laminated glass, although the lower limit of the content of the copper compound (B) varies depending on the thickness of the interlayer film, the copper compound (B) is preferably contained in an amount such that the solar transmittance in the laminated glass at a wavelength within a range of from 780 nm to 1200 nm becomes 70% or less.

In the present invention, a method is preferred in which the copper compound (B) having an average particle diameter of 200 nm or less are formed by carrying out a chemical reaction of copper ions in the presence of at least one kind of a thermoplastic resin (A) selected from the group consisting of a polyvinyl acetal resin, a polyethylene vinyl acetate copolymer resin, a polyurethane resin, a polyester resin, and a polyacrylic resin, and thus the copper compound (B) is contained in a film.

A preferred example of this method is a method in which, while a thermoplastic resin (A) coordinates to copper ions, the copper ions are subjected to a chemical reaction, and thereby microparticles of a copper compound (B) are contained in a film. The form of the thermoplastic resin (A) to achieve this is not particularly limited, and a thermoplastic resin (A) can coordinate to copper ions by impregnating a compound containing the copper ions with the thermoplastic resin (A) in the form of, for example, a slurry, a solution, pellets, fibers, strands, or a film. For the impregnation of the compound containing copper ions, it is preferred to use a solvent that swells the thermoplastic resin (A). The compound containing the copper ions is then chemically reacted with a compound containing ions that can chemically react with copper, and thereby microparticles of the copper compound (B) can be formed in a film.

The compound containing copper ions is not particularly limited as long as it is soluble in a solvent, and for example, copper acetate, copper formate, copper citrate, copper nitrate, cuprous chloride, cupric chloride, cuprous bromide, cupric bromide, cuprous iodide, cupric iodide, and the like are used. The copper ions may be monovalent or divalent, and are not particularly limited. In a case of using a compound containing monovalent copper ions, there is no problem with using hydrochloric acid, potassium iodide, ammonia, and the like together for the purpose of improving the solubility. Among these, copper nitrate, copper acetate, copper formate, and the like are preferably used.

As the compound to be chemically reacted with copper ions that are coordinated with the thermoplastic resin (A), a sulfating agent or a phosphate compound can be used that can form a sulfide or a phosphate compound after reaction, and preferably a sulfating agent is used. Examples of such a sulfating agent include sodium sulfide, sodium dithionate, sodium thiosulfate, sodium hydrogen sulfite, sodium pyrosulfate, hydrogen sulfide, thiourea, and thioacetamide. Among these, sodium sulfide is preferred from the points of costs, availability, and low corrosivity.

Examples of a technique to carry out a chemical reaction of the coordinated copper ions include: a method of passing a film through a solution in which the compound containing copper ions is dissolved in a solvent that swells the film during a step of film production or postprocessing, and then passing the film through a solution in which a compound containing sulfide ions is dissolved, and thus copper sulfide microparticles are formed inside the film; a method of making copper sulfide contained in the thermoplastic resin (A) in the form of, for example, strands or pellets, using a similar technique and then kneading together with the plasticizer (C) and the like; a method of fabricating copper sulfide by a similar technique in the thermoplastic resin (A) in the form of a slurry, and then kneading together with the plasticizer (C) and the like; and a method of fabricating copper sulfide by a similar technique in a thermoplastic resin (A) solution, and then coating the film. It should be noted that the technique is not limited to the methods mentioned above.

In the films obtained by the present invention, various additives, such as plasticizers, antioxidants, stabilizers, UV absorbers, lubricants, flame retarders, processing aids, antistatic agents, colorants, impact-resistant aids, adhesion conditioners, fillers and moisture resistance agents may be added, as needed, unless the effect of the invention is inhibited.

The method of producing a film, in particular an interlayer film for laminated glass, by forming the thermoplastic resin (A), in which the copper compound (B) is finely dispersed, into a film is not particularly limited, and such a film can be formed by, for example, extrusion methods, calender methods, and press methods. The thickness of an interlayer film for laminated glass is not particularly limited, and considering the penetration resistance and the weather resistance least required for a laminated glass, it is from 0.2 to 1.2 mm, preferably from 0.3 to 1.0 mm.

A laminated glass is obtained by laminating glass sheets and an interlayer film for laminated glass of the present invention. The glass possible to be used for lamination with an interlayer film for laminated glass is not particularly limited, and transparent glass sheets may be generally used. Examples of such a glass sheet include float glass sheets, polished glass sheets, figured glass sheets, wire-meshed glasses, wire-lined glasses, colored glasses, and heat ray-absorbing glasses. In addition, other than inorganic glasses, polycarbonate, polymethyl methacrylate, and the like, which are excellent in transparency, may also be used. The method of producing such a laminated glass is not particularly limited and conventionally known methods may be used.

The films of the present invention are excellent in transparency, electromagnetic wave permeability, and durability, and has a heat-shielding property that efficiently shields wavelengths within a range of from 780 nm to 1200 nm, which causes a strong sensation of heat to the skin, so that they can be preferably used for many applications, including: heat ray-shielding materials, such as tents, awnings, building materials, and window materials; optical materials, such as infrared ray cutoff filters; recording materials; heat storage materials; near infrared ray detection sensors. In addition, it is possible to provide an interlayer film for laminated glass having a heat-shielding property that efficiently shields wavelengths within a range of from 780 nm to 1200 nm, and such an interlayer film for laminated glass can form a laminated glass by being laminated with glass sheets. Laminated glasses thus obtained can be suitably used for, for example, windshields, side glasses, rear glasses, and roof glasses of automobiles, glass parts of vehicles, such as aircrafts and trains, glasses for buildings.

### Examples

Although the present invention is described in more detail below by way of Examples, the present invention is not limited in any way by the Examples. In the following Examples and Comparative Examples, measurement of the visible light transmittance, the solar transmittance, the haze of the films and the laminated glasses; evaluation of the electromagnetic wave permeability of the films and the laminated glasses; measurement of the particle diameter and the content of the copper compound (B) in the films and interlayer films; and evaluation of the moisture resistance of the laminated glasses were carried out in accordance with the methods described below.

### [Light Transmittance]

Using a spectrophotometer UV-4100 manufactured by Hitachi, Ltd., the transmittance at wavelengths within a range of from 280 to 2500 nm of fabricated films and laminated glasses was measured, and the visible light transmittance (%) from 380 to 780 nm was determined in accordance with JIS R 3106. The solar transmittance (%) from 780 to 1200 nm was also determined using a weighting factor provided in JIS R 3106.

### [Haze]

The haze (%) of the fabricated films and laminated glasses was measured in accordance with JIS K 7105.

### [Electromagnetic Wave Permeability]

The reflection loss value of the fabricated films within the frequency range of from 10 MHz to 1 GHz was measured in accordance with the electromagnetic wave shielding effectiveness measurement method (Kansai Electronic Industry Development Center method), and was compared with a value obtained by measuring a film of a polyvinyl butyral resin having a thickness of 1 mm. In addition, the reflection loss value of the fabricated laminated glasses was similarly measured, and was compared with a value obtained from a single glass sheet having a thickness of 2 mm. The electromagnetic wave permeability was evaluated by comparing the reflection loss values within the entire range of measured frequency and determining the difference (ΔdB) in accordance with the following criteria.
A: ΔdB is within 2 dB (passed)
B: ΔdB exceeds 2 dB.

### [Moisture Resistance]

The fabricated laminated glasses were left still in an atmosphere at 60°C and 90% RH for two weeks, followed by determining defects, such as fog and cracks in the glasses, with the following criteria, and thereby the moisture resistance was evaluated.
A: no defects (passed)
B: defect found

### [Content of Copper Compound (B)]

The amount (wt%) of the copper compound (B) contained in the fabricated films and interlayer films was determined using an ICP emission spectrometer IRIS-AP manufactured by Jarrell-Ash Co. Ltd.

### [Particle Diameter of Copper Compound (B)]

Fifty microparticles of the copper compound (B) were randomly selected from photographs of cross sections of the fabricated films and interlayer films using a transmission electron microscope (TEM) H-800NA, and the size of each microparticle was actually measured, and thus the average value was determined as the particle diameter (nm).

### Example 1

### (1) [Fabrication of Film]

A polyvinyl butyral resin (Mowital B68/1SF produced by Kuraray Specialities Europe (KSE)) was press-molded at 140°C for 5 minutes with a pressing machine, and thereby a film having a thickness of 1 mm was fabricated. The resulting film was immersed for 300 seconds in 1 L of a methanol/water mixed solvent (weight ratio: 3/1) at 25°C in which 50 g/L of copper nitrate was dissolved, and then was immersed for 300 seconds, while applying ultrasonic waves, in 1 L of a methanol/water mixed solvent (weight ratio: 3/1) at 25°C in which 20 g/L of sodium sulfide was dissolved. Further, the film was fully washed with a methanol/water mixed solvent (weight ratio: 3/1) and was dried, and thereby a copper sulfide combined film was obtained.

### (2) [Evaluation Result]

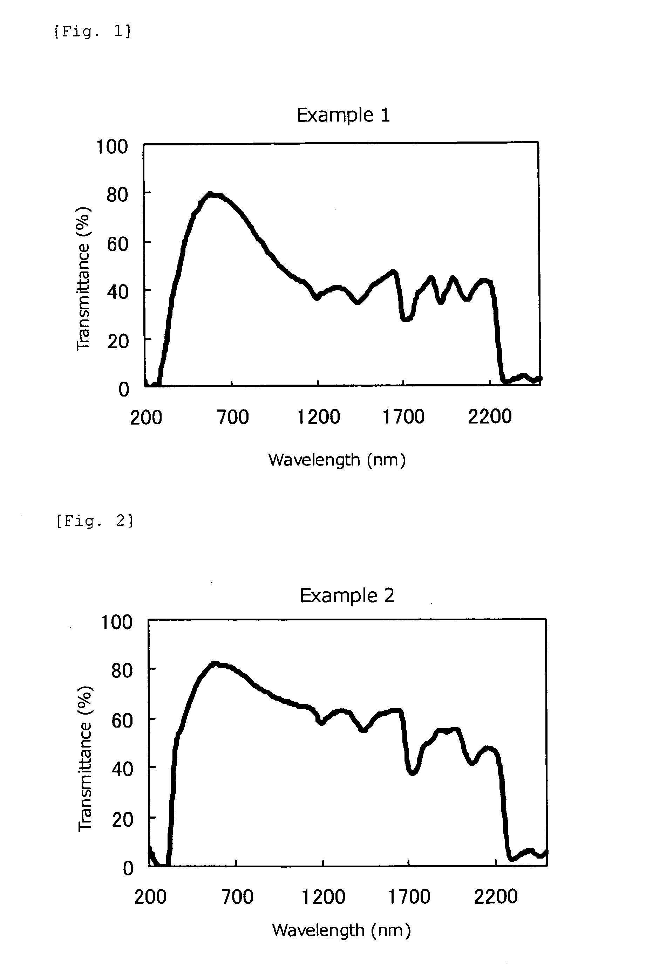

The results of performance evaluation of the resulting film are shown in Table 1 and Fig. 1.

### Example 2

A polyvinyl butyral resin (Mowital B60H produced by KSE) was shaped and further pelletized with a twin-screw molding machine, and thereby pellets with a size of an approximately 1 cm cube were fabricated. Ten grams of the pellets were immersed for 30 seconds in 1 L of an n-propanol/water mixed solvent (weight ratio: 1/1) at 25°C in which 100 g/L of copper nitrate was dissolved, and the pellets were filtered off, followed by immersing the pellets for 30 seconds, while applying ultrasonic waves, in 1 L of an n-propanol/water mixed solvent (weight ratio: 1/1) at 25°C in which 20 g/L of sodium sulfide was dissolved. After that, the pellets were fully washed with an n-propanol/water mixed solvent (weight ratio: 1/1) and were dried, and thereby pellets of a copper sulfide combined polyvinyl butyral resin were fabricated. Further, 6 g of the pellets mentioned above, 34 g of a polyvinyl butyral resin (Mowital B68/1SF produced by KSE), and 15.2 g of triethylene glycol-di-2-ethylhexanoate (hereinafter, abbreviated as 3G8) were mixed and were kneaded in a Labo Plastomill, followed by press-molding at 140°C for 5 minutes with a pressing machine, and thereby a film having a thickness of 1 mm was fabricated. The results of performance evaluation of the resulting film are shown in Table 1 and Fig. 2.

### Example 3

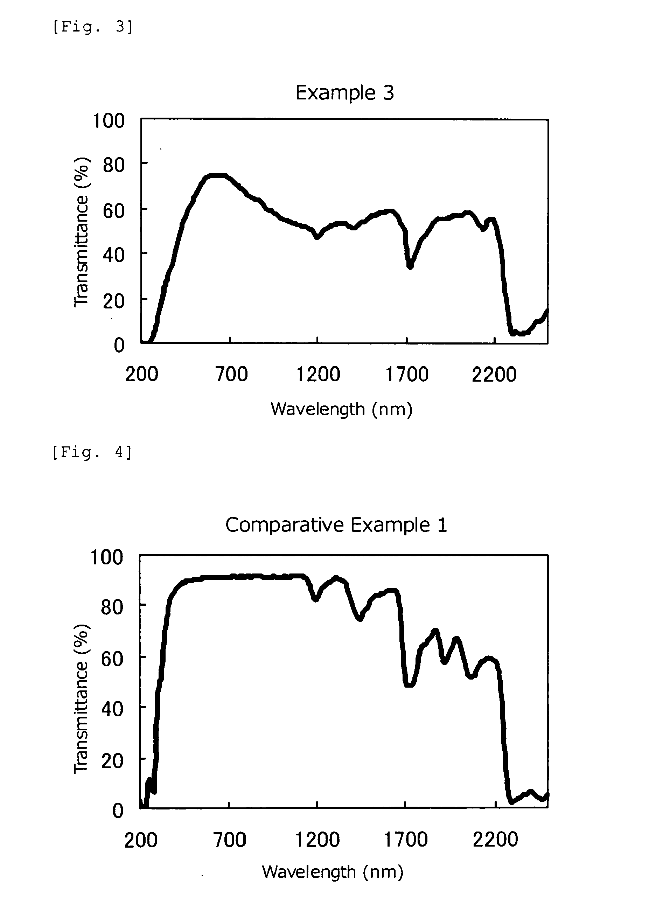

A polyethylene vinyl acetate copolymer resin (EVAFLEX EV45LX produced by Du Pont-Mitsui Polychemicals Co., Ltd.) was press-molded at 160°C for 5 minutes with a pressing machine, and thereby a film having a thickness of 0.76 mm was fabricated. The resulting film was immersed for 30 seconds in 1 L of a methanol/THF mixed solvent (weight ratio: 1/1) at 25°C in which 50 g/L of copper nitrate was dissolved, and then was immersed for 30 seconds, while applying ultrasonic waves, in 1 L of a methanol/THF mixed solvent (weight ratio: 1/1) at 25°C in which 20 g/L of sodium sulfide was dissolved. Further, the film was fully washed with a methanol/THF mixed solvent (weight ratio: 1/1) and was dried, and thereby a copper sulfide combined film was obtained. The results of performance evaluation of the resulting film are shown in Table 1 and Fig. 3.

### Comparative Example 1

A film in which copper sulfide was not combined was fabricated in a similar manner to Example 1 other than omitting the step of immersing the film obtained by press-molding in the copper nitrate solution and the step of immersing in the sodium sulfide solution. The results of performance evaluation of the resulting film are shown in Table 1 and Fig. 4.

### Comparative Example 2

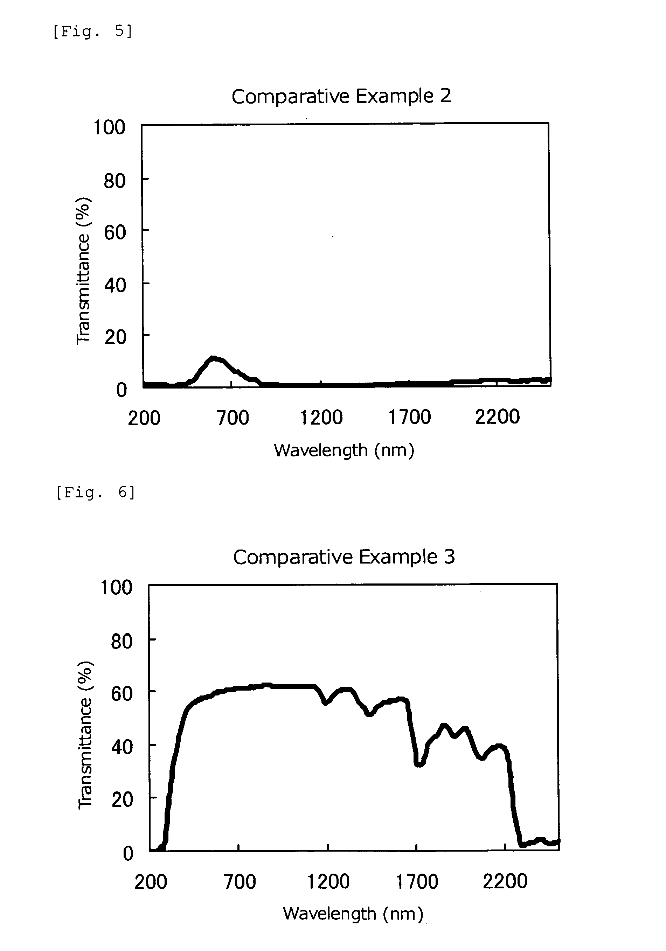

In terms of 100 parts by weight of a polyvinyl butyral resin (Mowital B68/1SF produced by KSE), 38 parts by weight of 3G8 was added and they were mixed. The mixture was kneaded in a Labo Plastomill, and then was press-molded at 140°C for 5 minutes with a pressing machine, and thereby a film having a thickness of 0.05 mm was fabricated. The resulting film was immersed for 300 seconds in 1 L of a methanol/water mixed solvent (weight ratio: 4/1) at 25°C in which 50 g/L of copper nitrate was dissolved, and then was immersed for 300 seconds, while applying ultrasonic waves, in 1 L of a methanol/water mixed solvent (weight ratio: 4/1) at 25°C in which 20 g/L of sodium sulfide was dissolved. Then, the film was fully washed with a methanol/water mixed solvent (weight ratio: 4/1). Further, each set of the steps of immersion in a copper nitrate solution, following immersion in a sodium sulfide solution, and washing and drying processes was repeated four times to fabricate a film that had an increased amount of copper sulfide therein. The results of performance evaluation of the resulting film are shown in Table 1 and Fig. 5.

### Comparative Example 3

In terms of 100 parts by weight of a polyvinyl butyral resin (Mowital B68/1SF produced by KSE), 38 parts by weight of 3G8, and further, 1 part by weight of a commercially available copper sulfide (produced by Wako Pure Chemical Industries, Ltd.) were added and they were mixed. The mixture was kneaded in a Labo Plastomill, and then was press-molded at 140°C for 5 minutes with a pressing machine, and thereby a film having a thickness of 1 mm was fabricated. The results of performance evaluation of the resulting film are shown in Table 1 and Fig. 6.

**[Table 1]**

| | Example 1 | Example 2 | Example 3 | Comparative Example 1 | Comparative Example 2 | Comparative Example 3 |
|---|---|---|---|---|---|---|
| Visible light transmittance (%) | 77 | 80 | 71 | 91 | 8 | 59 |
| Solar transmittance (%) | 54 | 68 | 62 | 91 | 4 | 59 |
| Haze (%) | 2.3 | 2.6 | 2.4 | 2 | 2.7 | 12.3 |
| Electromagnetic wave permeability | A | A | A | A | B | A |
| Content of copper compound (wt%) | 0.007 | 0.012 | 0.006 | 0 | 3.5 | 0.48 |
| Particle diameter of copper compound (nm) | 7 | 9 | 8 | - | 16 | ≥ 10000 |

From the results shown in Table 1 and Figs. 1 to 6, it is understood that the films of the present invention suppress the solar transmittance low while maintaining the visible light transmittance, have almost no haze, and also have high transparency and a high heat-shielding property. Moreover, they are also excellent in electromagnetic wave permeability and heat resistance. On the other hand, in a case of not containing the copper compound (B) such as Comparative Example 1, although the resulting film is excellent in the visible light transmittance, the solar transmittance is also high and the intended heat ray-shielding performance is not sufficient. In a case of containing a large amount of copper sulfide such as Comparative Example 2, the visible light transmittance is not sufficient. Further, simply by mechanically mixing such as Comparative Example 3, copper sulfide aggregates in places and it does not provide satisfactory transparency.

### Example 4

### (1) [Fabrication of Interlayer Film for Laminated Glass]

In terms of 100 parts by weight of a polyvinyl butyral resin (Mowital B68/1SF produced by Kuraray Specialities Europe (KSE)), 38 parts by weight of 3G8 was added and they were mixed. The mixture was kneaded in a Labo Plastomill, and then was press-molded at 140°C for 5 minutes with a pressing machine, and thereby a film having a thickness of 1 mm was fabricated. The resulting film was immersed for 300 seconds in 1 L of a methanol/water mixed solvent (weight ratio: 2.5/1) at 25°C in which 50 g/L of copper nitrate was dissolved, and then was immersed for 300 seconds, while applying ultrasonic waves, in 1 L of a methanol/water mixed solvent (weight ratio: 2.5/1) at 25°C in which 20 g/L of sodium sulfide was dissolved. Further, the film was fully washed with a methanol/water mixed solvent (weight ratio: 2.5/1) and was dried, and thereby a copper sulfide combined interlayer film for laminated glass was obtained.

### (2) [Fabrication of Laminated Glass]

The resulting interlayer film for laminated glass was sandwiched with two sheets of glass (Planilux Clear produced by Saint-Gobain K.K.) having a thickness of 2 mm, and then was maintained at 140°C for 90 minutes under reduced pressure, and thereby a laminated glass was fabricated.

### (3) [Evaluation Result]

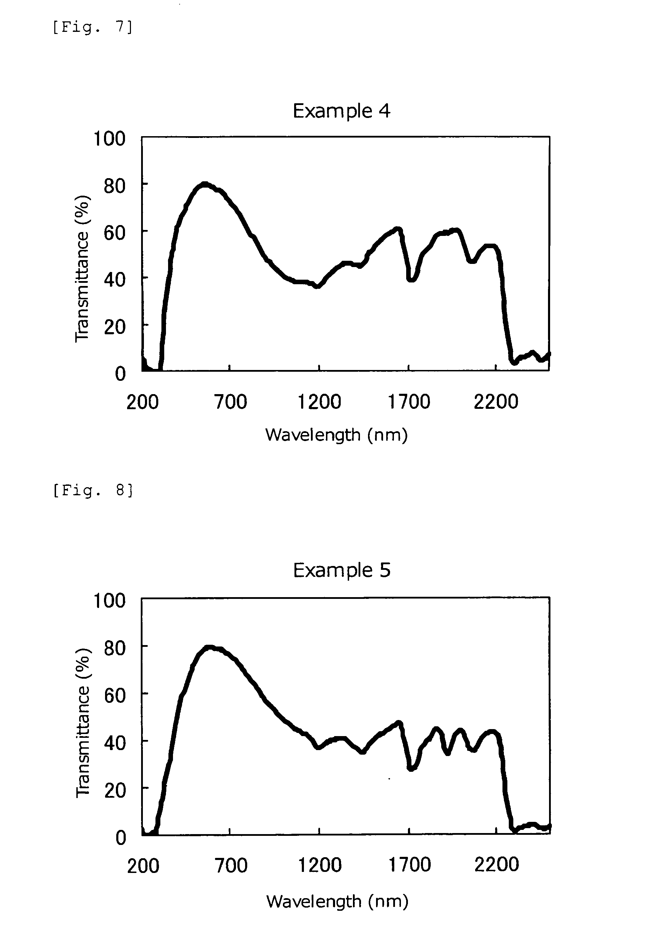

The results of performance evaluation of the interlayer film for laminated glass and the laminated glass are shown in Table 2 and Fig. 7.

### Example 5

An interlayer film for laminated glass was obtained in the conditions same as Example 4 other than changing the composition of all solvents used for the treatment of the resulting film into methanol/water (weight ratio: 3/1) in Example 4 (1) [Fabrication of Interlayer Film for Laminated Glass], and subsequently a laminated glass was fabricated in a similar manner to Example 4. The results of performance evaluation of the interlayer film for laminated glass and the laminated glass are shown in Table 2 and Fig. 8.

### Example 6

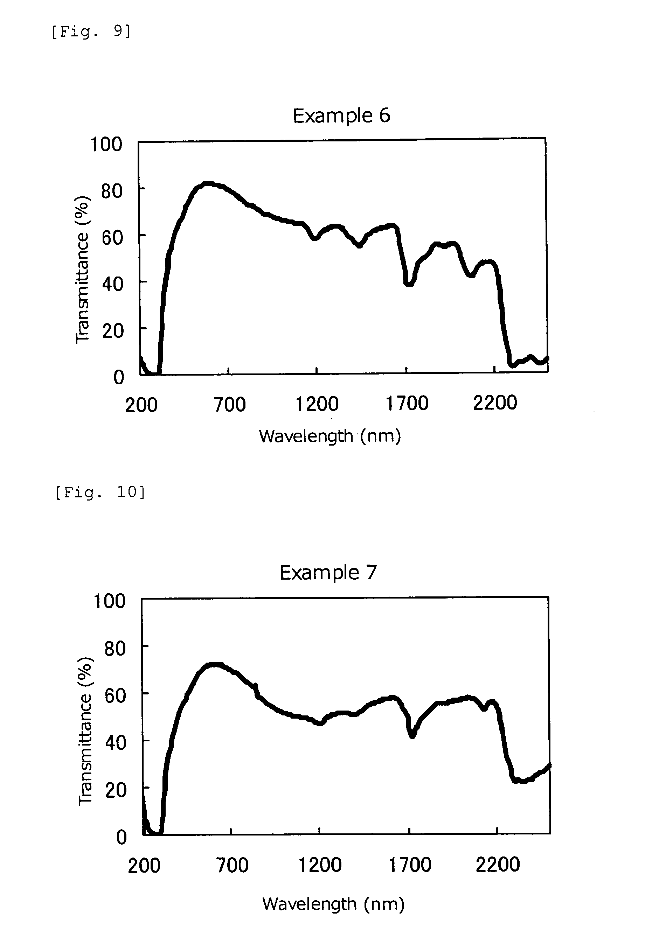

A polyvinyl butyral resin (Mowital B60H produced by KSE) was shaped and was further pelletized with a twin-screw molding machine, and thereby pellets with a size of an approximately 1 cm cube were fabricated. Ten grams of the pellets were immersed for 30 seconds in 1 L of an n-propanol/water mixed solvent (weight ratio: 1/1) at 25°C in which 100 g/L of copper nitrate was dissolved, and the pellets were filtered off, followed by immersing the pellets for 30 seconds, while applying ultrasonic waves, in 1 L of an n-propanol/water mixed solvent (weight ratio: 1/1) at 25°C in which 20 g/L of sodium sulfide was dissolved. After that, the pellets were fully washed with an n-propanol/water mixed solvent (weight ratio: 1/1) and were dried, and thereby pellets of a copper sulfide combined polyvinyl butyral resin were fabricated. Further, 6 g of the pellets mentioned above, 34 g of a polyvinyl butyral resin (Mowital B68/1SF produced by KSE), and 15.2 g of 3G8 were mixed and were kneaded in a Labo Plastomill, and then were press-molded at 140°C for 5 minutes with a pressing machine, and thereby an interlayer film for laminated glass having a thickness of 1 mm was fabricated. Further, a laminated glass was fabricated in a similar manner to Example 4. The results of performance evaluation of the interlayer film for laminated glass and the laminated glass are shown in Table 2 and Fig. 9.

### Example 7

Twenty-five grams of a polyethylene vinyl acetate copolymer resin (EVAFLEX EV45LX produced by Du Pont-Mitsui Polychemicals Co. , Ltd.) was press-molded at 160°C for 5 minutes with a pressing machine, and thereby an interlayer film for laminated glass having a thickness of 0.76 mm was fabricated. The resulting film was immersed for 30 seconds in 1 L of a methanol/THF mixed solvent (weight ratio: 1/1) at 25°C in which 50 g/L of copper nitrate was dissolved, and then was immersed for 30 seconds, while applying ultrasonic waves, in 1 L of a methanol/THF mixed solvent (weight ratio: 1/1) at 25°C in which 20 g/L of sodium sulfide was dissolved. Further, the film was fully washed with a methanol/THF mixed solvent (weight ratio: 1/1) and was dried, and thereby a copper sulfide combined interlayer film for laminated glass was obtained. Further, a laminated glass was fabricated in a similar manner to Example 4. The results of performance evaluation of the interlayer film for laminated glass and the laminated glass are shown in Table 2 and Fig. 10.

### Comparative Example 4

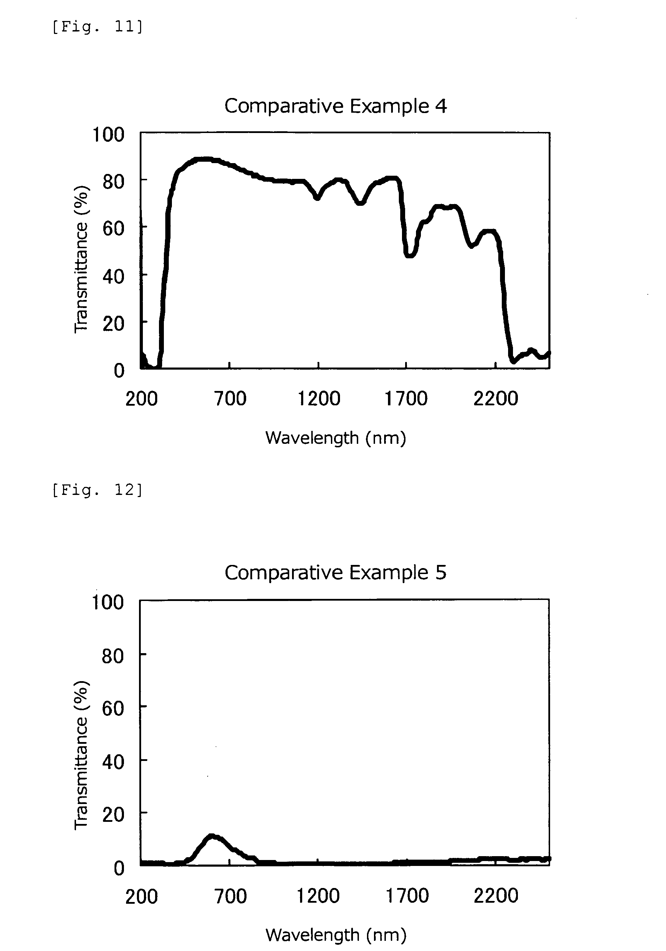

A interlayer film for laminated glass was obtained in the conditions same as Example 4 other than omitting the step of immersing the resulting film in the copper nitrate solution and the step of immersing in the sodium sulfide solution not to combine copper sulfide, and subsequently a laminated glass was fabricated in a similar manner to Example 4. The results of performance evaluation of the interlayer film for laminated glass and the laminated glass are shown in Table 2 and Fig. 11.

### Comparative Example 5

In terms of 100 parts by weight of a polyvinyl butyral resin (Mowital B68/1SF produced by KSE), 38 parts by weight of 3G8 was added and they were mixed. The mixture was kneaded in a Labo Plastomill, and then was press-molded at 140°C for 5 minutes with a pressing machine, and thereby a film having a thickness of 0.05 mm was fabricated. The resulting film was immersed for 300 seconds in 1 L of a methanol/water mixed solvent (weight ratio: 4/1) at 25°C in which 50 g/L of copper nitrate was dissolved, and then the film was immersed for 300 seconds, while applying ultrasonic waves, in 1 L of a methanol/water mixed solvent (weight ratio: 4/1) at 25°C in which 20 g/L of sodium sulfide was dissolved. Further, the film was fully washed with a methanol/water mixed solvent (weight ratio: 4/1). Each set of the steps of immersion in the copper nitrate solution, following immersion in the sodium sulfide solution, and washing and drying processes was repeated four times to fabricate an interlayer film that had an increased amount of copper sulfide therein. Further, a laminated glass was fabricated in a similar manner to Example 4. The results of performance evaluation of the interlayer film for laminated glass and the laminated glass are shown in Table 2 and Fig. 12.

### Comparative Example 6

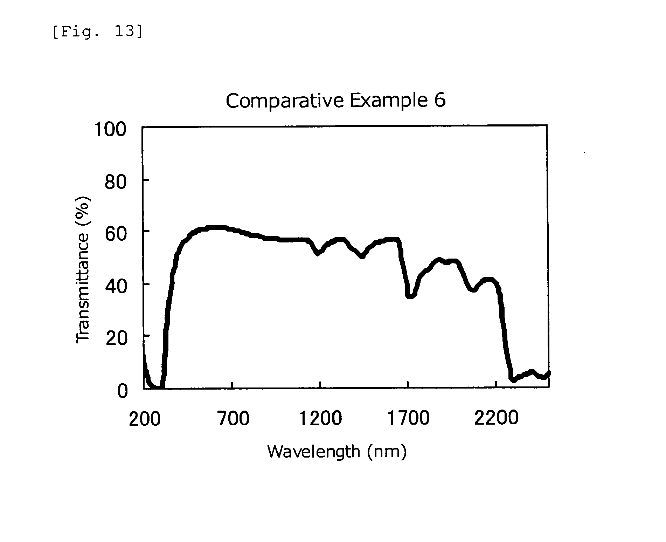

In terms of 100 parts by weight of a polyvinyl butyral resin (Mowital B68/1SF produced by KSE), 38 parts by weight of 3G8, and further, 1 part by weight of a commercially available copper sulfide (produced by Wako Pure Chemical Industries, Ltd.) were added and they were mixed. The mixture was kneaded in a Labo Plastomill, and then was press-molded at 140°C for 5 minutes with a pressing machine, and thereby an interlayer film for laminated glass having a thickness of 1 mm was fabricated. Further, a laminated glass was fabricated in a similar manner to Example 4. The results of performance evaluation of the interlayer film for laminated glass and the laminated glass are shown in Table 2 and Fig. 13.

**[Table 2]**

| | Example 4 | Example 5 | Example 6 | Example 7 | Comparative Example 4 | Comparative Example 5 | Comparative Example 6 |
|---|---|---|---|---|---|---|---|
| Visible light transmittance (%) | 79 | 74 | 80 | 70 | 88 | 8 | 60 |
| Solar (%) transmittance (%) | 47 | 54 | 68 | 60 | 80 | 3 | 57 |
| Haze (%) | 1.3 | 1.1 | 1.2 | 1.4 | 1 | 1.8 | 11.7 |
| Electromagnetic wave permeability | A | A | A | A | A | B | A |
| Moisture resistance | A | A | A | A | A | A | A |
| Content of copper compound (wt%) | 0.007 | 0.012 | 0.006 | 0.013 | 0 | 3.4 | 0.48 |
| Particle diameter of copper compound (nm) | 7 | 9 | 8 | 9 | - | 14 | ≥ 10000 |

From the results shown in Table 2 and Figs. 7 to 13, it is understood that the interlayer films for laminated glass and the laminated glasses of the present invention suppress the solar transmittance low while maintaining the visible light transmittance, have almost no haze, and also have high transparency and a high heat-shielding property. Moreover, they are also excellent in electromagnetic wave permeability and heat resistance. On the other hand, in a case of not containing the copper compound (B) such as Comparative Example 4, although the resulting laminated glass is excellent in the visible light transmittance, the solar transmittance is also high, and the intended heat ray-shielding performance is not sufficient. In a case of containing a large amount of copper sulfide such as Comparative Example 5, the visible light transmittance is not sufficient. Further, simply by mechanically mixing such as Comparative Example 6, copper sulfide aggregates in places and it does not provide satisfactory transparency.

## Claims

1. A film comprising at least one kind of a thermoplastic resin (A) selected from the group consisting of a polyvinyl acetal resin, a polyethylene vinyl acetate copolymer resin, a polyurethane resin, a polyester resin, and a polyacrylic resin, wherein the film contains microparticles of a copper compound (B) having an average particle diameter of 200 nm or less.

2. The film according to claim 1, wherein the film exhibits a visible light transmittance of 70% or more at a wavelength within a range of from 380 to 780 nm and a solar transmittance of 70% or less at a wavelength within a range of from 780 to 1200 nm and has a haze of 5.0% or less.

3. The film according to claim 1 or 2, wherein the thermoplastic resin (A) is a polyvinyl acetal resin or a polyethylene vinyl acetate copolymer resin.

4. The film according to claim 3, wherein the thermoplastic resin (A) is a polyvinyl acetal resin.

5. The film according to claim 4, wherein the polyvinyl acetal resin is a polyvinyl butyral resin.

6. The film according to any one of claims 1 to 5, wherein the copper compound (B) is contained in a range of greater than 0 part by weight and not more than 3.0 parts by weight in terms of 100 parts by weight of the thermoplastic resin (A).

7. The film according to any one of claims 1 to 6, wherein the copper compound (B) is copper sulfide.

8. The film according to any one of claims 1 to 7, wherein the microparticles of the copper compound (B) are formed by carrying out a chemical reaction of copper ions in the presence of the thermoplastic resin (A).

9. An interlayer film for laminated glass comprising the film according to any one of claims 1 to 8.

10. The interlayer film for laminated glass according to claim 9, wherein the interlayer film contains 20 to 100 parts by weight of a plasticizer (C) in terms of 100 parts by weight of the thermoplastic resin (A).

11. A laminated glass comprising the interlayer film for laminated glass according to claim 9 or 10.

12. The laminated glass according to claim 11, wherein the laminated glass exhibits a visible light transmittance of 70% or more at a wavelength within a range of from 380 to 780 nm and a solar transmittance of 70% or less at a wavelength within a range of from 780 to 1200 nm and has a haze of 5.0% or less.

13. A method of producing the film according to any one of claims 1 to 7, comprising: forming the microparticles of the copper compound (B) by carrying out a chemical reaction of the copper ions in the presence of the thermoplastic resin (A).

14. The method of producing a film according to claim 13, wherein the thermoplastic resin (A) is impregnated with a compound containing copper ions, and then the compound containing copper ions is reacted with a compound containing ions that can react with the copper ions to form the microparticles of the copper compound (B) in the thermoplastic resin (A).
